# EUROPÄISCHE PATENTSCHRIFT

(11) **EP 3 266 661 B1**
(45) Veröffentlichungstag und Bekanntmachung des Hinweises auf die Patenterteilung: **23.10.2019**
(21) Anmeldenummer: 16001497.3
(22) Anmeldetag: 05.07.2016
(51) Int. Cl.: B60T 7/20, B60T 11/10, B60T 13/66, B60T 17/22

(54) **ANHÄNGERBREMSSYSTEM SOWIE BETRIEBSVERFAHREN FÜR EIN ANHÄNGERBREMSSYSTEM**
TRAILER BRAKE SYSTEM AND OPERATING METHODS FOR A TRAILER BRAKE SYSTEM
SYSTEME DE FREINAGE DE REMORQUE ET PROCEDES DE FONCTIONNEMENT D'UN SYSTEME DE FREINAGE DE REMORQUE

(43) Veröffentlichungstag der Anmeldung: 10.01.2018
(73) Patentinhaber: Paul Forrer AG, 8962 Bergdietikon (CH)
(72) Erfinder: Guggisberg, Erich, 5445 Eggenwil/AG (CH); Nef, Jakob, 8583 Donzhausen/TG (CH)
(74) Vertreter: Stulz Messerschmidt, Stephan

(56) Entgegenhaltungen:
- EP-A1- 2 955 073
- DE-A1- 2 919 539

## Beschreibung

Die Erfindung betrifft ein anhängerseitiges Bremssystem gemäss dem unabhängigen Patentanspruch 1 sowie ein Verfahren zum Betrieb eines Bremssystems eines Anhängers, welcher an einem Zugfahrzeug angehängt ist gemäss dem unabhängigen Patentanspruch 17.

Aus dem *Stand der Technik* sind verschiedene Anhängerbremsvorrichtungen bekannt. Diese reichen von den handbetätigten Bremsen bis zu den modernen Bremssystemen mit mehreren Bremskreisen und bei welchem das Bremssystem des Anhängers mit dem Bremssystem des Zugfahrzeuges kombiniert und verbunden ist. Auf dem Markt haben sich sowohl Druckluftbremsen als auch hydraulische Bremsen etabliert.

Aus dem Stand der Technik sind verschiedene Erfindungen bezüglich Anhängerbremsen bekannt, so etwa die französische Patentanmeldung 2874880 der Robert Bosch GmbH.

Diese Erfindungen stammen aus einer Zeit, als die technischen Vorschriften betreffend Bremsen und Bremssystemen noch nicht so umfassend, detailliert und umfangreich, wie dies heute der Fall ist, waren. Die Vorschriften werden - auf internationaler Ebene - dauernd den neuen Gegebenheiten und technischen Erfordernissen und Erkenntnissen angepasst.

Eine klassische Zweileiterbremse wird in EP 2955073A1 beschrieben. Diese umfasst lediglich eine Brems- und Steuerleitung. Die vorliegend beschriebene Erfindung zeichnet sich insbesondere dadurch aus, dass diese mit der Verwendung eines Dreiwegventils sowie von Anwesenheitssensoren an den jeweiligen Anschlüssen sowie eines zusätzlichen Anschlusses zum Umhängen der Zusatzleitung/Steuerleitung sowohl als Einleiter- auch als Zweileiterbremse gleichzeitig verwendet werden kann. Durch die in den Anschlüssen integretierten Anwesenheitssensoren wird gleichzeitig der Realisation Abreissbremse ermöglicht.

Aufgrund fortschreitender Technik aber auch zur Gewährleistung und Förderung eines einheitlichen Binnenmarktes sowie der Gewährleistung eines hohen Sicherheitsstandards hat die EU verschiedene Rechtsakte bezüglich Bremsen erlassen.

Ein letzter wesentlicher Entwicklungsschritt in dieser Hinsicht war der Erlass der Verordnung 167/2013 vom 5. Februar 2013 über die Genehmigung und Marktüberwachung von land- und forstwirtschaftlichen Fahrzeugen. Die technischen Details und einzuhaltenden Vorschriften bezüglich Bremsen und Bremssystemen wurden mit der delegierten Verordnung EU 2015 / 68 mit Datum vom 15. Oktober 2014 erlassen und festgelegt.

Neben der Präzisierung und Ergänzung verschiedener technischer Vorgaben wurde legiferiert, dass neue Fahrzeuge nur noch mit sogenannten Zweileiterbremssystemen (insbesondere bestehend einer Brems- und einer Zusatzleitung) ausgerüstet werden dürfen bzw. zugelassen werden. Bestehende und immatrikulierte Fahrzeuge dürfen grundsätzlich weiter verwendet werden.

Aufgrund den neuen gesetzlichen Vorgaben, wonach bei Neuimmatrikulationen nur noch Zweileiterbremsanlagen zulässig sind und gleichzeitig bereits immatrikulierte Fahrzeuge weiter betrieben werden dürfen, ergeben sich Kompatibilitäsprobleme, wenn beispielsweise mit einem "alten" Zugfahrzeug (mit einem Einleitbremssystem) ein neu immatrikulierter Anhänger gezogen werden soll und umgekehrt.

Es bestünden nur dann keine Kompatibilitätsprobleme, wenn gleichzeitig der gesamte Fahrzeugpark entsprechend den neuen Vorschriften gleichzeitig umgerüstet würde. Ein solches Vorhaben wäre aber mit nicht geringen Umrüstungskosten verbunden und lohnt sich rein aus finanziellen Überlegungen nicht.

Mit der vorliegenden Erfindung wird eine Vorrichtung und Verfahren offenbart, mit welchem es ermöglicht wird, dass ein Anhänger mit beliebigen Zugfahrzeugen gezogen werden kann; egal ob beim Zugfahrzeug eine "altes" hydraulisches Einleiterbremssystem oder ein Zweileiterbremssystem entsprechend der neusten EU-Verordnung vorhanden ist. Die vorliegende Erfindung kann generell für hydraulische Anhänger-Bremssysteme eingesetzt werden.

Aus dem *Stand der Technik* sind, soweit ersichtlich, keine hydraulischen Anhänger Bremssysteme beschrieben worden bzw. bekannt, welche sowohl als Einleiterbemssysteme als auch als Zweileiterbremssysteme zum Einsatz gebracht werden können. Dieses Bedürfnis des Marktes ergab sich erst mit der oben erwähnten Gesetzesnovelle auf europäischer Ebene.

Aufgabe der vorliegenden Erfindung ist es, eine Vorrichtung und Verfahren zu beschreiben, welche sowohl bei einem hydraulischen Zweileiter- als auch einem Einleiterbemssystem auf dem Anhänger eingesetzt werden kann, ohne dass hierzu Modifikationen am Bremssystem des Zugfahrzeuges oder am Anhänger notwendig sind.

Vor diesem Hintergrund ist es Aufgabe der vorliegenden Erfindung, eine einfache, kostengünstige, Vorrichtung und ein Verfahren zu beschreiben, welche es ermöglicht, Anhängefahrzeuge mit einer hydraulischen Zweileiterbremsanlage gemäss den einschlägigen Vorgaben der oben erwähnten delegierten Verordnung der EU auszustatten und gleichzeitig die Kompatibilität für den allfälligen Betrieb mit bestehenden Zugfahrzeugen mit herkömmlicher Einleiter-Bremssystemen gewährleisten zu können.

Ferner ist es Aufgabe der vorliegenden Erfindung, eine Vorrichtung und Verfahren zu beschreiben, bei welcher die sogenannte Abreissfunktion direkt in der hydraulischen Leitung integriert ist. Unter Abreissfunktion versteht man eine selbsttätige Bremsung des Anhängefahrzeuges, wenn aussergewöhnliche Zustände, wie das Abreissen einer Leitung, auftreten.

Gemäss den obgenannten EU-Vorschriften müssen Anhängerbremsvorrichtungen insbesondere folgende Funktionen beinhalten und nachfolgenden Vorschriften genügen:
- Es ist zwischen Betriebsbrems-, Hilfsbrems- und Parkbremsfunktion zu unterscheiden. Dies haben je separate Funktion und Vorgaben zu erfüllen;
- Die Mindestbremsverzögerung ist je nach Fahrzeugklasse vorgeschrieben;
- Die Wirksamkeit der Anhängerbremsanlage ist im Zusammenhang mit der Bremswirkung des Zugfahrzeuges und dem Beladungszustand des Anhängers abzustufen;
- Es sind maximal zulässige zeitliche Verzögerungen, welche für den Druckaufbau resp. das Einsetzen der Bremswirkung am Anhänger zulässig sind, einzuhalten;
- Zur Gewährleistung einer optimalen Betriebssicherheit müssen Anhängerbremsvorrichtungen über bestimmte Sicherheitsvorrichtungen verfügen, um bei einem Ausfall eines Systems oder anderen Störungen an einem Anhänger (allenfalls zusammen mit dem Zugfahrzeug) definiert und kontrolliert eine Bremsvorgang einzuleiten. Gleichzeitig soll die Anhängerbremsvorrichtung so konzipiert sein, damit auch ohne Zugfahrzeug bestimmte Manöver möglich sind.

Aufgrund der Tatsache, dass die Ursache der vorliegenden Erfindungen im Erlass neuer Gesetzesbestimmungen liegt und bisher kein Bedarf an entsprechenden Erfindungen und Vorrichtungen bestand, sind auf dem Markt keine entsprechende Produktelösungen für diese Fragestellung bekannt und es können daher auch keine Nachteile der bestehenden Lösungen benannt werden.

Die vorliegende Erfindung ist dadurch gekennzeichnet, dass für die Auslösung der Abreiss-Bremsung keine separat geführten Verbindungen oder Seile zwischen Zugfahrzeug und Anhänger gelegt werden müssen, da sämtliche in der Verordnung beschriebenen Funktionen via der beiden vorgeschriebenen Leitungen (Brems- und Zusatzleitung) erfüllt werden und durch die spezielle Konstruktion der Anschlussvorrichtung gewährleistet wird.

Die oben erwähnte Entwicklung in der Gesetzgebung führt nun zwangsläufig dazu, dass ein Teil der bis heute üblichen Anhänger nur bedingt mit Neufahrzeugen (neu nur noch mit Zweileiterbremssystemen erlaubt) kompatibel sind. Um dieses Problem zu beseitigen, müsste theoretisch ein gesamter Fahrzeugpark modernisiert und mit anhängerseitigen Bremssystemen, welche mit den neuen Systemen gemäss Verordnung kompatibel sind, nachgerüstet werden. Dies aber wäre wiederum nachteilig, weil so nachgerüstete Anhänger nicht mehr mit den bisherigen Zugfahrzeugen betrieben werden können.

Die vorliegende Erfindung offenbart eine Vorrichtung, welche zudem modular aufgebaut ist und es ermöglicht, dass damit bestückte Anhänger sowohl mit bestehenden Zugfahrzeugen (mit alten Bremssystemen) als auch mit Zugfahrzeugen, welche über Bremssysteme, die der neuen europäische Verordnung entsprechen, betrieben werden kann.

Die oben erwähnten Aufgaben werden durch eine Vorrichtung und ein Verfahren gemäss den abhängigen Patentansprüchen gelöst, indem eine einheitliche anhängerseitige Vorrichtung offenbart wird, welche sowohl den oben erwähnten gesetzlichen Vorschriften entspricht, zusätzlich aber auch ohne grossen Zusatzaufwand auf bestehende Anhänger mit Ein- oder Zweitleiterbremssystemen aufgebaut und nachgerüstet werden kann, sodass insbesondere Anhänger mit bestehendem Einleiterbremssystem ebenfalls mit neuen Zweileiterbremssystemen gemäss erwähnten EU-Gesetzesvorschriften betrieben werden können.

Zugleich ist es Aufgabe der vorliegenden Erfindung, eine sogenannte Abreissbremse zu beschreiben, welche direkt in den Leitungen integriert ist. Im Gegensatz von Druckluftbremsen, wo ein unbeabsichtigtes Lösen oder Reissen der Druckluftschläuche zu einem Druckabfall und einer sofortigen Notbremsung führt, ist ein solches Betriebssystem bei hydraulisch gebremsten Anhänger nicht möglich, weil unweigerlich Öl auf der Strasse verloren ginge und somit gefährliche und umweltbelastende Zustände geschaffen würden. Der technische Lösungsansatz bei Druckluftbremsen kann nicht auf hydraulische Bremsen übertragen werden.

Dieses Problem wird bei hydraulischen Bremsanlagen herkömmlicherweise mit einer mechanischen Auslösevorrichtung in Form eines Seilzuges sowie einem auf am Anhänger aufgebauten Druckspeicher gelöst. Die vorliegende Erfindung offenbart eine Vorrichtung, wo die Auslösevorrichtung direkt in und an der Hydraulikleitung integriert ist. Die gewünschte Funktion wird durch ein am anhängerseitigen Ende der Bremsleitung platziertes, spezielles Kupplungselement ausgelöst, welches bei externer definierter Zugkraft auf die Leitung, die Verbindung trennt, die Leitung verschliesst und via den Impuls eines integrierten Anwesenheitssensors die gewünschte Notbremsfunktion via Speicher einleitet. Im Resultat entspricht die offenbarte Lösung dem System bei Druckluftbremsen.

Es zeigen schematisch und vereinfacht:

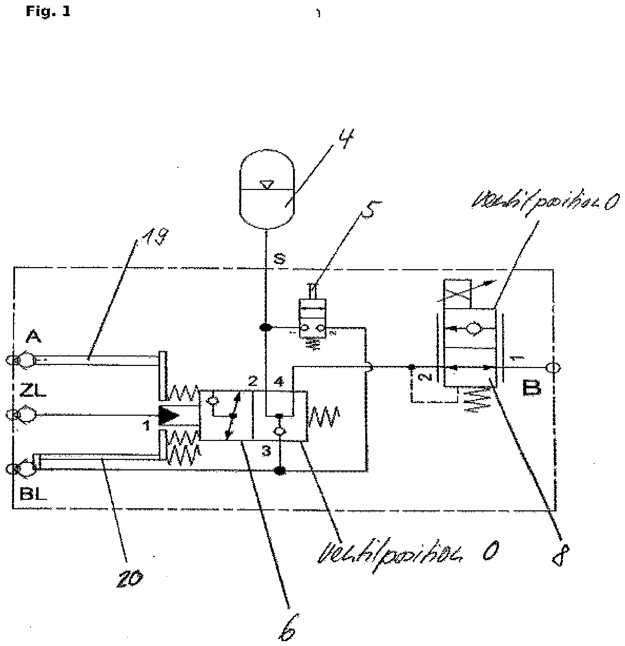

- **Fig. 1**: Prinzipschaltschema, hydraulisch

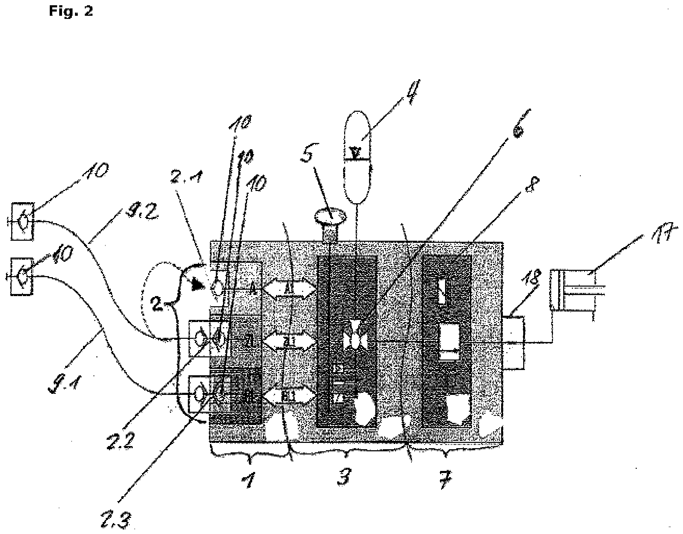

- **Fig. 2**: Konstruktionsaufbau, schematisch

In einer Ausführungsform besteht das anhängerseitige Bremssystem aus einer sogenannten Kupplungsbaugruppe 1, welche eine Anschlussvorrichtung 2 mit drei verschiedenen Anschlüssen 2.1, 2.2, 2.3 enthält. Hier werden die vom Zug-fahrzeug herkommenden Leitungen (Bremsleitung 9.1 und Zusatzleitung 9.2) angekoppelt. In einer vorzugsweisen Ausführungsform enthält die Kupplungs-baugruppe 1 drei Anschlüsse, nämlich einen dritten Anschluss 2.3 für die Bremsleitung 9.1, einen zweiten Anschluss 2.2 für die Zusatzleitung 9.2 und einen ersten Anschluss für die Systemumstellung 2.1.

Weiter besteht die Erfindung in einer Ausführungsform aus einer Druckregelgruppe 7 und einer Ventilbaugruppe 3.

In einer Ausführungsform ist die Kupplungsbaugruppe 1 so ausgeführt, dass sie sowohl als autonome Einheit aber auch als Bestandteil und Modul der beiden weiteren Baugruppen (der Ventilbaugruppe 3 und der Druckregelgruppe 7) zusammen gebaut und als eine einzige Blockbaugruppe betrieben werden kann.

Die sogenannte Ventilbaugruppe 3 besteht in einer Ausführungsform aus einem Druckspeicher 4 und einem Speicherentleerungsventil 5, sowie ein darin integriertes Dreiwegeventil 6. Der Druckspeicher 4 hat Sicherheitsfunktion und dient dazu, jederzeit noch über genügend Druck auf die Bremsen geben zu können, wenn beispielsweise auf der Bremsleitung 9.1 kein Drucköl mehr vorhanden ist oder wenn die Bremsleitung 9.1 und/oder die Zusatzleitung 9.2 unbeabsichtigt weggerissen worden sind. In einem solchen Fall geht das Dreiwegeventil 6 in Position 0 und via dem Druckspeicher 4 werden die entsprechenden Druckanschlüsse 18 für den Bremszylinder 17 bzw. die Bremszylinder 17 mit Drucköl beaufschlagt, was zu einer kontrollierten Bremsung führt.

Die Druckregelgruppe 7 besteht aus einem Druckregelventil 8, einem Druckanschluss 18 für den Bremszylinder 17. Mit der Druckregelgruppe 7 wird ein Bremsdruck auf den Bremszylinder 17, abhängig vom Beladungszustand des Anhängers, erzeugt und beaufschlagt, sodass für jeden Beladungszustand die vom Gesetz geforderte Bremsverzögerung garantiert ist.

Die Bremsleitung 9.1 und Zusatzleitung 9.2 zwischen dem Anhängerbremssystem und dem Bremssystem des Zugfahrzeuges sind an beiden Enden mit lösbaren Kupplungen 10 ausgerüstet, wobei der dritte Anschluss 2.3 für die Bremsleitung 9.1 als auch der erste Anschluss 2.1 für die Systemumstellung mit einem sogenannten Anwesenheitssensor 19, 20 ausgerüstet ist. Mit diesen Sensoren 19, 20 wird festgestellt, ob eine Leitung, z.B. 9.1.oder 9.2 an der Anschlussvorrichtung 2 bzw. am ersten bzw. dritten Anschluss 2.1, 2.3 angeschlossen ist oder nicht. Dieses Signal wird unter anderem als Stellwert für die Betätigung des 3/2-Wege-Umschaltventiles 6 verwendet.

In einer Ausführungsform besteht ein solcher Anwesenheitssensor 19, 20 aus einer mechanische Vorrichtung mit einem Näherungsschalter. Es sind aber auch Kombinationen mit hydraulischen und/oder elektrischen Komponenten denkbar. Der Anwesenheitssensor 19, 20 kann je nach den konkreten Bedürfnissen ein elektrisches, hydraulisches, pneumatisches oder mechanisches Signal als Stellsignal erzeugen.

Der zweite und dritte Anschluss 2.2 und 2.3 sind derart ausgeführt, dass, sobald die Brems- oder Zusatzleitung Verbindungsleitungen 9.1/9.2 über einen definierten Wert mit einer Zugbelastung beansprucht wird, sich der Anschluss löst und die vorher bestehende hydraulische Verbindung unterbrochen wird (sog. Break-away-Funktion). Die max. zulässige Zugbelastung ist über den standardisierten mechanischen Verriegelungsmechanismus im Kupplungsteil der Anschlüsse 2.1, 2.2, 2.3 bzw. 10 definiert.

Die Bremsleitung 9.1 und die Zusatzleitung 9.2 sind in einer vorzugsweisen Ausführungsform derart ausgestaltet, dass diese mittels handelsüblichen Verschlussmechanismen bei einem Entkoppelungsvorgang sofort öldicht abschliessen und in eingekoppeltem Zustand eine hydraulische Verbindung des Anhängerbremssystems mit dem Bremssystems des Zugfahrzeuges gebildet wird.

Die Kupplungsbaugruppe 1, die Druckregelgruppe 7 und die Anschlussvorrichtung 2 sind so konzipiert und konstruiert, dass diese sowohl als separate Einzelbestandteile beim Anhänger eingebaut, aber auch als kompakte Gesamtgruppe auf dem Anhänger verbaut werden können. In einer Ausführungsform weist die Kupplungsbaugruppe 1 drei Anschlüsse 2.1, 2.2 und 2.3 auf, wovon der eine für die Bremsleitung 9.1, der zweite für die Zusatzleitung 9.2 und der dritte Anschluss für die Systemumstellung (Einleiterbremssystem zu Zweileiterbremssystem) dient.

Das Druckregelventil 8 wie auch das Dreiwegeventil 6 kann je nach den konkreten Bedürfnissen mechanisch, elektrisch, pneumatisch oder hydraulisch angesteuert werden.

Die Funktion und Wirkungsweise der einzelnen Komponenten in einer bevorzugten Ausführungsform wird nachfolgend beschrieben. Zum besseren Verständnis ist ein Funktionsbeschrieb der verschiedenen Betriebsmodi vorangestellt. Die Funktionsweise einer vorteilhaften Ausführungsform der erfindungsgemässen Vorrichtung ergibt sich aus der nachfolgenden Beschreibung der verschiedenen Betriebsmodi.

Mit der erfindungsgemässen Vorrichtung sind in einer bevorzugten Ausführungsform grundsätzlich nachfolgend beschriebene Betriebszustände möglich und zu unterscheiden. Es gilt zwischen dem Betrieb in einem Einleiterbremssystem und dem Betrieb in einem Zweileiterbremssystem zu unterscheiden.

Das Einleiterbremssystem kennzeichnet sich dadurch, dass ein solches System ohne Zusatzleitung 9.2 konzipiert ist und als Hauptbestandteil über eine Bremsleitung (kurz BL) verfügt. Diese Bremsleitung 9.1 wird mit Druck beaufschlagt, sobald ein Bremsvorgang eingeleitet werden soll. Dieser Druck geht auf die Bremszylinder 17 und führt zur Bremsung.

Das Zweileiterbremssystem ist eine technische Weiterentwicklung des Einleiterbremssystems, welches neben der Bremsleitung 9.1. noch eine Zusatzleitung (kurz ZL) 9.2 aufweist. Mit dieser Zusatzleitung 9.2 , welche verschiedene, definierte Druckzustände aufweisen kann, werden verschiedene Betriebszustände des Bremssystems erfasst und jeweils davon abhängig, erfolgt beispielsweise eine Notbremsung oder die Bremse des Anhängers wird nicht freigegeben, etc.

Das Zweileiterbremssystem wird nachfolgend anhand der verschiedenen Betriebszustände beschrieben.

### a) Bremsanlage des Anhängers nicht in Betrieb (z.B. Anhänger ist nicht an Zugfahrzeug angehängt oder separat parkiert, etc.)

Die Bremsleitung 9.1 und die Zusatzleitung 9.2 sind nicht am Bremssystem des Zugfahrzeuges angekoppelt. Der Druckspeicher 4 ist drucklos und entleert. Der Bremszylinder 17 ist ebenfalls drucklos. Eine rein mechanische Parkbremse ist am Anhänger via eine separate, hier nicht beschriebene Vorrichtung aktiv, weil es gemäss den einschlägigen Gesetzesbestimmung nicht erlaubt ist, dass der abgehängte Anhänger mittels eines hydraulischen Bremssystems dauerhaft blockiert wird.

b) Bremsanlage des Anhängers in Betrieb nehmen: Die Bremsleitung 9.1 und die Zusatzleitung 9.2 sind drucklos. Der Druckspeicher 4 ist drucklos und entleert. Der Bremszylinder 17 ist ebenfalls drucklos. Die Parkbremse (hier nicht dargestellt) sichert den Anhänger dauerhaft gegen ein Wegrollen.

In diesem Betriebszustand wird die Bremsleitung 9.1 und die Zusatzleitung 9.2 am Zugfahrzeug angeschlossen und so sind die Bremssysteme des Anhängers und des Zugfahrzeugs miteinander verbunden. Durch kurzes Betätigen der hydraulischen Bremse am Zugfahrzeug wird die Bremsleitung 9.1 mit Drucköl beaufschlagt. Die Zusatzleitung 9.2 bleibt noch drucklos, aber der Druckspeicher 4 wird gefüllt und ebenfalls der Bremszylinder 17 wird mit Drucköl beaufschlagt.

Beim Loslassen der Betriebsbremse am Zugfahrzeug wird die Bremsleitung 9.1 drucklos, die Bremszylinder 17 bleibt aber durch den gefüllten Druckspeicher 4 aktiv, sodass jetzt die mechanische Parkbremse vom Anhänger entriegelt werden kann. Sobald die zugfahrzeugseitige Feststellbremse auch gelöst wird steigt der Druck in der Zusatzleitung auf ein vom Gesetz definiertes Druckniveau an und gibt dadurch die Bremszylinder 17 via Dreiwegeventil 6 wieder frei. Nun kann mit den angehängten Anhänger weggefahren werden.

c) Bremsanlage anhängerseitig ausser Betrieb setzen: Die Bremsleitung 9.1 und die Zusatzleitung 9.2 sind mit dem Bremssystem des Zugfahrzeugs verbunden. Die Bremsleitung 9.1 ist drucklos und durch die betätigte Feststellbremse des Zugfahrzeuges ist die Zusatzleitung 9.2 auch drucklos. Der Druckspreicher 4 ist noch unter Druck und gefüllt, das Dreiwegeventil 6 in Position 0 und die Bremszylinder 17 dementsprechend unter Druck <150bar und der Anhänger somit noch gebremst. Anschliessend ist die (mechanische) Parkbremse des Anhängers zu betätigen (hier nicht beschriebene Vorrichtung), welche das Wegrollen des Anhängefahrzeuges dauerhaft verunmöglicht.

Als nächstes kann mit dem Speicherentleerungsventil 5 der Speicher 4 und die Bremszylinder 17 entlastet und drucklos gemacht werden. Das überschüssige Medium fliesst dadurch via Bremsleitung 9.1 drucklos zurück in das Bremssysten des Zugfahrzeuges. Sobald dieser Entleerungsvorgang abgeschlossen ist, kann die Bremsleitung 9.1 und die Zusatzleitung 9.2 am Zugfahrzeug entkoppelt werden können.

### d) Weitere Betriebsmodi der Bremsanlage bei gekoppelter Bremsleitung 9.1 und Zusatzleitung 9.2 (Motor des Zugfahrzeuges läuft und Bremssystem wird mit den notwendigem Drucköl. Elektrizität etc. versorgt)

d1) *Betriebsbremse des Zugfahrzeugs betätigt, mechanische Feststellbremse des Zugfahrzeugs betätigt.* In diesem Fall steht die Bremsleitung 9.1 unter Druck (< 150bar), d.h. der Bremszylinder 17 steht ebenfalls unter Druck und die Bremse des Anhängers ist aktiviert. Die Zusatzleitung 9.2 ist drucklos. Das 3/2-Wege-Umschaltventil 6 befindet sich in Pos 0 und der Druckspeicher 4 ist gefüllt.
d2) *Betriebsbremse des Zugfahrzeugs gelöst, mechanische Feststellbremse des Zugfahrzeugs betätigt.* In diesem Fall ist Bremsleitung 9.1 drucklos. Die Zusatzleitung 9.2 ist ebenfalls drucklos. Das 3/2-Wege-Umschaltventil 6 befindet sich in Pos. 0 und der Druckspeicher 4 ist gefüllt. Da sich das 3/2-Wege-Umschaltventil 6 in Position 0 befindet, wird der Bremszylinder 17 via Druckspeicher 4 mit Drucköl beaufschlagt.
d3) *Betriebsbremse des Zugfahrzeugs gelöst, mechanische Feststellbremse des Zugfahrzeugs gelöst (Fahrbetrieb).* In diesem Fall ist Bremsleitung 9.1 drucklos. Die Zusatzleitung 9.2 weist einen Druck von zwischen 15 bis maximal 35 bar auf. Das 3/2-Wege-Umschaltventil 6 befindet sich in Pos. 1 und der Druckspeicher 4 ist gefüllt, jedoch ohne hydraulische Verbindung zum Bremszylinder 17, sodass der Bremszylinder 17 auch drucklos ist.
d4) *Betriebsbremse des Zugfahrzeugsbetätigt, mechanische Feststellbremse des Zugfahrzeugs gelöst (Bremsbetrieb).* In diesem Fall wird die Bremsleitung 9.1 und der Bremszylinder 17 mit Druck beaufschlagt. Die Zusatzleitung 9.2 weist einen Druck von zwischen 15 bis maximal 35 bar auf. Das 3/2-Wege-Umschaltventil 6 befindet sich in Pos. 1.

Nur bei diesem Bremsbetrieb ist das Druckregelventil 8 von betriebstechnischer Relevanz und aktiv, indem ein vom aktuellen Beladungszustand des Anhängers (gemessen z.B. via Einfederungsweg oder ähnlich) der Bremszylinder 17 mit Druck (1 - max. 150 bar) beaufschlagt wird. Das Druckregelventil 8 bzw. der Druckbereich ist so eingestellt, dass die gemäss der EU-Verordnung geforderte Bremswirkungen im definierten Toleranzband bei jedem Beladungszustand gewährleistet ist.

e) Anhängerseitige Abreissbremse (Brake-away-Funktion): Mit dieser Funktion wird sichergestellt, dass wenn - aus welchen Gründen auch immer - die Bremsleitung 9.1 und/oder Zusatzleitung 9.2 keine Verbindung mehr mit dem Bremssystem des Anhängers haben, sofort eine Notbremsung des Anhängers eingeleitet wird.

Bei einer definierten Zugkraft auf die Bremsleitung 9.1 und/oder Zusatzleitung 9.2 und auf die Anschlüsse 2.2 und/oder 2.3 werden diese (praktisch ölverlustfrei) von der Kupplungsbaugruppe 1 entkoppelt, was durch Anwesenheitssensoren 19 bzw. 20 detektiert wird und sofort dazu führt, dass das 3/2-Wege-Umschaltventil 6 in Position 0 schaltet und via Druckspeicher 4 eine Bremsung eingeleitet wird.

### f) Hilfsbrems- und andere vom Zugfahrzeug eingeleitete Bremsfunktionen am Anhängefahrzeug (Ausgangslage ist der Betriebszustand Fahr- oder Bremsbetrieb wie oben beschrieben):

f1) *Motor stellt ab oder Ölversorgung am Zugfahrzeug fällt aus* (Betriebsbremse und mechanische Feststellbremse gelöst); In einem solchen Fall fällt in der Zusatzleitung 9.2 der Druck ab, was dazu führt, dass der Druck unter 10 bar fällt und das Dreiwegeventil 6 sich in Position 0 bewegt, sodass es zu einer Notbremsung via Druckspeicher 4 kommt.
f2) *Betriebsbremse hat sonstigen Defekt, weshalb die Hilfsbremse zum Einsatz kommt und betätigt wird:* Auch in einem solchen Fall fällt in der Zusatzleitung 9.2 der Druck ab, was dazu führt, dass der Druck unter 10 bar fällt und das Dreiwegeventil 6 sich in Position 0 bewegt, sodass es zu einer Notbremsung via Druckspeicher 4 kommt.

### Funktionsbeschrieb im Einleiter Modus

Wie bereits einleitend beschrieben, ist eines der Erfindungsmerkmale, dass die oben beschriebene Zweileiterbremse auch als Einleiterbremssystem betrieben werden kann.

Die Funktionen sind identisch wie bei der oben beschriebenen hydraulischen Zweileiterbremsanlage. Bis auf die oben unter Punkt "f" beschriebenen Betriebsmodi gelten bei der vorliegend beschriebenen Vorrichtung alle Funktionen auch uneingeschränkt für die Einleiterbremse, wobei einzige Bedingung ist, dass die Zusatzleitung 9.2 nicht an das Zugfahrzeug angekuppelt wird, sondern in den Anschluss 2.1 an der anhängerseitigen Kupplungsbaugruppe 1 eingesteckt wird (dargestellt in Konstruktionsaufbau mit gestrichelter Linie).

Durch den bei der Kupplung A integrierten Anwesenheitssensor 19 wird der Betriebsmodus Einleiterbremssystem freigegeben. Auf diese Weise ist die Funktion der Zusatzleitung 9.2 neutralisiert. Die vorne beschriebene Abreissfunktion bleibt erhalten und wird durch die Bremsleitung 9.1 und den Anwesenheitssensor 20 und der Kupplung 2.2 alleine in gleicher Weise sichergestellt.

## Patentansprüche

1. Hydraulisches, anhängerseitiges Bremssystem umfassend
a) eine Kupplungsbaugruppe (1), welche wenigstens eine Anschlussvorrichtung (2) mit drei separaten Anschlüssen (2.1;2.2;2.3) umfasst, wobei der zweite Anschluss (2.2) der direkten Ansteuerung eines Dreiwegeventils (6) dient;
b) eine Ventilbaugruppe (3), welche wenigstens einen Druckspeicher (4), wenigstens ein Speicherentleerungsventil (5) sowie wenigstens das Dreiwegeventil (6) umfasst
c) eine Druckregelgruppe (7), welche wenigstens ein Druckregelventil (8) und wenigstens ein Druckanschluss (18) für den Bremszylinder (17) umfasst, wobei
d) der dritte Ansschluss (2.3) zur koppelbaren Verbindung des Bremssystems des Zugfahrzeuges mit dem hydraulischen, anhängerseitigen Bremssystem mittels einer Bremsleitung (9.1) mit beidseitig lösbaren Kupplungen (10) dient;
e) der zweite Anschluss (2.2) zur koppelbaren Verbindung des Bremssystems des Zugfahrzeuges mit dem hydraulischen, anhängerseitigen Bremssystem mittels einer Zusatzleitung (9.2) mit beidseitig lösbaren Kupplungen (10) dient:
f) der erste Anschluss (2.1) zur Aufnahme einer der lösbaren Kupplungen (10) der Zusatzleitung (9.2) bei einer Anwendung des hydraulischen anhängerseitigen Bremssystem in Kombination mit einem Zugfahrzeug mit einem Einleiterbremssystem dient;
g) der erste und dritte Anschluss (2.1; 2.3) jeweils mit einem Anwesenheitssensor (19;20) zum Detektieren der physikalischen Anwesenheit einer lösbaren Kupplung (10) in dem Anschluss (2.1;2.3 ausgeführt sind; und
h) das Signal der Anwesenheitssensoren (19;20) als Stellwert für das Dreiwegeventil (6) für eine Notbremsfunktion via den Druckspeicher (4) verwendet wird.

2. Hydraulisches, anhängerseitiges Bremssystem gemäss Anspruch 1, **dadurch gekennzeichnet, dass** sich die Bremsleitung (9.1) bzw. die Zusatzleitung (9.2) von der Anschlussvorrichtung (2) entkoppelt, sobald die Verbindungsleitung (9.1;9.2) mit Zugkräften beansprucht wird.

3. Hydraulisches, anhängerseitiges Bremssystem gemäss einem der vorangehenden Ansprüche, **dadurch gekennzeichnet, dass** jeder Anwesenheitssensor (19/20) aktiviert wird, sobald die Bremsleitung (9.1) bzw. die Zusatzleitung (/9.2) von der Anschlussvorrichtung (2) entkoppelt oder angekoppelt wird.

4. Hydraulisches, anhängerseitiges Bremssystem gemäss einem der vorangehenden Ansprüche, **dadurch gekennzeichnet, dass** die Bremsleitung (9.1) bzw. Zusatzleitung (9.2) an beiden Enden einen Verschlussmechanismus aufweist, welcher bei einer Entkoppelung öldicht abschliesst und im eingekoppelten Zustand das anhängerseitige Bremssystem mit dem Bremssystem des Zugfahrzeuges hydraulisch verbindet.

5. Hydraulisches, anhängerseitiges Bremssystem gemäss einem der vorangehenden Ansprüche, **dadurch gekennzeichnet, dass** jeder Anwesenheitssensor (19/20) an der Anschlussvorrichtung (2) oder an der Kupplung (10) der Bremsleitung (9.1) bzw. Zusatzleitung (9.2) angeordnet ist und als Anwesenheitssensor (19/20) oder Drucksensor konzipiert ist.

6. Hydraulisches, anhängerseitiges Bremssystem gemäss einem der vorangehenden Ansprüche, **dadurch gekennzeichnet, dass** jeder Anwesenheitssensor (19/20) mit dem entsprechenden elektrischen, elektronischen, hydraulischen, pneumatischen oder mechanischen Leitsystem des Anhängerbremssystems und/oder dem hydraulischen Bremssystem des Zugfahrzeuges verbunden ist.

7. Hydraulisches, anhängerseitiges Bremssystem gemäss einem der vorangehenden Ansprüche, **dadurch gekennzeichnet, dass** die Kupplungsbaugruppe (1), die Druckregelgruppe (7) und die Anschlussvorrichtung (2) je als einzelne, mechanische Baugruppe ausgeführt wird, welche miteinander verbunden werden bzw. zusammengesteckt werden können..

8. Hydraulisches, anhängerseitiges Bremssystem gemäss einem der vorangehenden Ansprüche, **dadurch gekennzeichnet, dass** die Kupplungsbaugruppe (1) drei Anschlussvorrichtungen (2.1/2.2/2.3) aufweist, wovon der dritte Anschluss (2.3) für die Aufnahme der Bremsleitung (9.1), der zweite Anschluss (2.2) für die Aufnahme der Zusatzleitung (9.2) und der erste Anschluss (2.1) für die Aufnahme der zugfahrzeugseitigen lösbaren Kupplung (10) der Zusatzleitung (9.2) dient.

9. Hydraulisches, anhängerseitiges Bremssystem gemäss einem der vorangehenden Ansprüche, **dadurch gekennzeichnet, dass** die Brems- und Zusatzleitung (9.1/9.2) auch unter Druck an die Kupplungsbaugruppe (1) angeschlossen werden können.

10. Hydraulisches, anhängerseitiges Bremssystem gemäss einem der vorangehenden Ansprüche, **dadurch gekennzeichnet, dass** das Druckregelventil (8) und/oder das Dreiwegeventil (6) mechanisch, elektrisch, pneumatisch oder hydraulisch angesteuert werden.

11. Hydraulisches, anhängerseitiges Bremssystem gemäss einem der vorangehenden Ansprüche, **dadurch gekennzeichnet, dass** die Signale der Anwesenheitssensoren (19;20) auf elektrischer, hydraulischer oder mechanischer Basis auf das jeweilige Leitsystem des Zugfahrzeuges übertragen und eingespeist werden.

12. Hydraulisches, anhängerseitiges Bremssystem gemäss einem der vorangehenden Ansprüche, **dadurch gekennzeichnet dass** das Druckregelventil (8) ein im Verhältnis zum eingehenden hydraulischen Bremsdruck der Bremsleitung einen lastabhängigen abgestuften Bremsdruck auf den Bremszylinder (17) abgibt.

13. Hydraulisches, anhängerseitiges Bremssystem gemäss einem der vorangehenden Ansprüche, **dadurch gekennzeichnet, dass** der Druckspeicher (4) mittels des Speicherentleerungsventils (5) manuell entleert werden kann, sobald die Brems- und Zusatzleitung (9.1,9.2) angekoppelt sind.

14. Hydraulisches, anhängerseitiges Bremssystem gemäss einem der vorangehenden Ansprüche, **dadurch gekennzeichnet, dass** wenn die Bremsleitung (9.1) und/oder die sich im ersten Anschluss (2.1) befindliche Zusatzleitung (9.2) von der Anschlussvorrichtung (2) entkoppelt, ein kontrollierter Bremsvorgang eingeleitet wird, indem via Druckspeicher (4) der Bremszylinder (17) über das Dreiwegventil (6) mit Druck beaufschlagt wird .

15. Hydraulisches, anhängerseitiges Bremssystem gemäss einem der vorangehenden Ansprüche, **dadurch gekennzeichnet dass** durch eine Leckage oder einen fehlenden Druckaufbau in der Zusatzleitung (9.2) ein kontrollierter Bremsvorgang eingeleitet wird, in dem das Dreiwegeventil (6) in eine Position gesetzt wird , worin der Druckspeicher (4) den Bremszylinder (17) mit Druck beaufschlagt.

16. Hydraulisches, anhängerseitiges Bremssystem gemäss einem der vorangehenden Ansprüche, **dadurch gekennzeichnet, dass** je nach konkreten Bedürfnissen Kupplungsbaugruppen (1), Ventilbaugruppen (3) und Druckregelgruppen (7) in mehrfacher Ausführung verbaut und miteinander kombiniert werden können.

17. **Verfahren** zum Betrieb eines anhängerseitigen, hydraulischen Bremssystems, nach einem der Ansprüche 1 bis 16, welches sowohl als Einleiter- als auch Zweileiterbremssystem betrieben werden kann, **dadurch kennzeichnet, dass** die Umschaltung vom Einleiter- zum Zweileiterbremssystem und umgekehrt mittels Umlegen der Zusatzleitung (9.2) an den ersten Anschluss (2.1) geschieht und das Signal des Anwesenheitssensors (19) am ersten Anschluss (2.1) die Funktionen der Zusatzleitung (9.2) kurzschliesst und diese somit neutralisiert werden.

## Claims

1. a hydraulic braking system on the trailer side comprising
a) a coupling assembly (1) which comprises at least one connecting device (2) with three separate connections (2.1; 2.2; 2.3), the second connection serving the direct actuation of a three-way valve (6);
b) a valve assembly (3), which comprises at least one pressure accumulator (4), at least one accumulator drain valve (5) and at least the three-way valve (6)
c) a pressure control group (7) which comprises at least one pressure control valve (8) and at least one pressure connection (18) for the brake cylinder (17), wherein
d) the third connection (2.3) serves for the connectable connection of the brake system of the towing vehicle with the hydraulic brake system on the trailer side by means of a brake line (9.1) with couplings (10) detachable on both sides;
e) the second connection (2.2) serves for the connectable connection of the brake system of the towing vehicle with the hydraulic trailer-side brake system by means of an additional line (9.2) with couplings (10) releasable on both sides:
f) the first connection (2.1) serves to receive one of the detachable couplings (10) of the auxiliary line (9.2) when the hydraulic trailer-side braking system is used in combination with a towing vehicle with a single-conductor braking system;
g) the first and third connections (2.1; 2.3) are each provided with a presence sensor (19; 20) for detecting the physical presence of a releasable coupling (10) in the connection (2.1; 2.3); and
h) the signal from the presence sensors (19; 20) is used as a control value for the three-way valve (6) for an emergency braking function via the pressure accumulator (4).

2. Hydraulic brake system on the trailer side according to claim 1, **characterized in that** the brake line (9.1) or the additional line (9.2) is decoupled from the connecting device (2) as soon as the connecting line (9.1; 9.2) is subjected to tensile forces.

3. Hydraulic brake system on the trailer side in accordance with one of the preceding claims, **characterized in that** each presence sensor (19/20) is activated as soon as the brake line (9.1) or the additional line (/9.2) is decoupled or coupled from the connecting device (2).

4. hydraulic braking system on the trailer side in accordance with one of the preceding Claims, **characterized in that** the brake line (9.1) or additional line (9.2) has a closure mechanism at both ends, which closes in an oil-tight manner when uncoupled and in the coupled state hydraulically connects the trailer-side brake system to the brake system of the towing vehicle.

5. Hydraulic brake system on the trailer side in accordance with one of the preceding requirements, **characterized in that** each presence sensor (19/20) is arranged on the connecting device (2) or on the coupling (10) of the brake line (9.1) or additional line (9.2) and is designed as a presence sensor (19/20) or pressure sensor.

6. Hydraulic braking system on the trailer side in accordance with one of the preceding requirements, **characterized in that** each presence sensor (19/20) is connected to the corresponding electrical, electronic, hydraulic, pneumatic or mechanical control system of the trailer braking system and/or the hydraulic braking system of the towing vehicle.

7. Hydraulic brake system on the trailer side in accordance with one of the preceding requirements, **characterized in that** the coupling assembly (1), the pressure regulating group (7) and the connecting device (2) are each designed as individual mechanical assemblies which are connected to one another or can be plugged together.

8. Hydraulic brake system on the trailer side in accordance with one of the preceding claims, **characterized in that** the coupling assembly (1) has three connecting devices (2.1/2.2/2.3), of which the third connection (2.3) serves to receive the "brake line (9.1), the second connection (2.2) serves to receive the additional line (9.2) and the first connection (2.1) serves to receive the detachable coupling (10) on the tractor side of the additional line (9.2).

9. Hydraulic brake system on the trailer side in accordance with one of the preceding requirements, **characterised in that** the brake and auxiliary lines (9.1/9.2) can also be connected to the coupling assembly (1) under pressure.

10. Hydraulic braking system on the trailer side in accordance with one of the preceding requirements, **characterized in that** the pressure regulating valve (8) and/or the three-way valve (6) are actuated mechanically, electrically, pneumatically or hydraulically.

11. Hydraulic braking system on the trailer side in accordance with one of the preceding requirements, **characterized in that** the signals from the presence sensors (19; 20) are transmitted on an electrical, hydraulic or mechanical basis to the respective control system of the towing vehicle and fed in.

12. hydraulic brake system on the trailer side in accordance with one of the preceding claims, **characterized in that** the pressure regulating valve (8) delivers a load-dependent graduated brake pressure to the brake cylinder (17) in relation to the incoming hydraulic brake pressure of the brake line.

13. Hydraulic brake system on the trailer side in accordance with one of the preceding claims, **characterized in that** the pressure accumulator (4) can be emptied manually by means of the accumulator emptying valve (5) as soon as the brake and auxiliary lines (9.1, 9.2) are coupled.

14. Hydraulic brake system on the trailer side in accordance with one of the preceding claims, **characterized in that** when the brake line (9.1) and/or the additional line (9.2) located in the first connection (2.1) is decoupled from the ' connection device (2), a controlled braking process is initiated by applying pressure to the brake cylinder (17) via the three-way valve (6) via a pressure accumulator (4).

15. Hydraulic braking system on the trailer side in accordance with one of the preceding claims, **characterized in that** a controlled braking operation is initiated by a leakage or a missing pressure build-up in the auxiliary line (9.2), in which the three-way valve (6) is set in a position in which the pressure accumulator (4) applies pressure to the brake cylinder (17).

16. Hydraulic brake system on the trailer side in accordance with one of the preceding requirements, **characterized in that**, depending on specific requirements, coupling assemblies (1), valve assemblies (3) and pressure control groups (7) can be installed in multiple versions and combined with one another.

17. Method for operating a trailer-side hydraulic brake system according to one of claims 1 to 16, which can be operated both as a single-conductor brake system and as a two-wire brake system, **characterized in that** the changeover from the single-conductor brake system to the two-wire brake system and vice versa takes place by means of the auxiliary line (9.2) being moved to the first connection (2.1) and the signal of the presence sensor (19) at the first connection (2.1) short-circuits the functions of the auxiliary line (9.2) and the latter is thus neutralized.

## Revendications

1. un système de freinage hydraulique du côté de la remorque comprenant
a) un ensemble d'accouplement (1) qui comprend au moins un dispositif de raccordement (2) avec trois raccords séparés (2.1 ; 2.2 ; 2.3), le second raccord servant à l'actionnement direct d'un robinet à trois voies (6) ;
b) un ensemble de soupape (3) qui comprend au moins un accumulateur de pression (4), au moins une soupape de décharge d'accumulateur (5) et au moins la soupape à trois voies (6)
c) un groupe de régulation de pression (7) qui comprend au moins une soupape de régulation de pression (8) et au moins un raccord de pression (18) pour le cylindre de frein (17), où
d) le troisième raccord (2.3) sert à raccorder le système de freinage du véhicule tracteur au système de freinage hydraulique côté remorque au moyen d'une conduite de frein (9.1) avec raccords (10) amovibles des deux côtés ;
e) le deuxième raccord (2.2) sert à raccorder le système de freinage du véhicule tracteur au système de freinage hydraulique côté remorque au moyen d'une conduite supplémentaire (9.2) avec raccords (10) débrayables des deux côtés :
f) le premier raccord (2.1) sert à recevoir l'un des attelages amovibles (10) de la conduite auxiliaire (9.2) lorsque le système de freinage hydraulique côté remorque est utilisé en combinaison avec un véhicule tracteur avec un système de freinage monoconducteur ;
g) les première et troisième connexions (2.1 ; 2.3) sont munies chacune d'un capteur de présence (19 ; 20) pour détecter la présence physique d'un accouplement amovible (10) dans la connexion (2.1 ; 2.3) ; et
h) le signal des détecteurs de présence (19 ; 20) est utilisé comme valeur de commande pour la vanne trois voies (6) pour une fonction de freinage d'urgence via l'accumulateur de pression (4).

2. Système de freinage hydraulique côté remorque selon la revendication 1, **caractérisé en ce que** la conduite de frein (9.1) ou la conduite supplémentaire (9.2) est découplée du dispositif de liaison (2) dès que la conduite de liaison (9.1 ; 9.2) est soumise à des efforts de traction.

3. Système de freinage hydraulique côté remorque selon l'une des revendications précédentes, **caractérisé en ce que** chaque capteur de présence (19/20) est activé dès que la conduite de frein (9.1) ou la conduite supplémentaire (/9.2) est découplée ou couplée du dispositif de raccordement (2).

4. système de freinage hydraulique du côté de la remorque conformément à l'une des dispositions précédentes
Revendications, **caractérisées en ce que** la conduite de frein (9.1) ou la conduite supplémentaire (9.2) présente aux deux extrémités un mécanisme de fermeture qui se ferme de manière étanche à l'huile lors du désaccouplage et qui, à l'état attelé, relie hydrauliquement le système de freinage côté remorque au système de freinage du véhicule tracteur.

5. Système de freinage hydraulique côté remorque selon l'une des exigences précédentes, **caractérisé en ce que** chaque capteur de présence (19/20) est disposé sur le dispositif de liaison (2) ou sur l'accouplement (10) de la conduite de frein (9.1) ou de la conduite supplémentaire (9.2) et est conçu comme capteur de présence (19/20) ou de pression.

6. Système de freinage hydraulique côté remorque selon l'une des exigences précédentes, **caractérisé en ce que** chaque capteur de présence (19/20) est relié au système de commande électrique, électronique, hydraulique, pneumatique ou mécanique correspondant du système de freinage de la remorque et/ou au système de freinage hydraulique du véhicule tracteur.

7. Système de freinage hydraulique côté remorque selon l'une des exigences précédentes, **caractérisé en ce que** l'ensemble d'accouplement (1), le groupe de régulation de pression (7) et le dispositif de liaison (2) sont conçus chacun comme des ensembles mécaniques individuels qui sont reliés entre eux ou peuvent être enfichés ensemble.

8. Système de freinage hydraulique côté remorque selon l'une des revendications précédentes, **caractérisé en ce que** l'ensemble d'accouplement (1) présente trois dispositifs de liaison (2.1/2.2/2.3), dont le troisième raccord (2.3) sert à recevoir la "conduite de frein (9.1), le deuxième raccord (2.2) sert à recevoir la conduite supplémentaire (9.2) et le premier raccord (2.1) sert à recevoir le raccord amovible (10) du côté tracteur de la conduite supplémentaire (9.2).

9. Système de freinage hydraulique côté remorque selon l'une des exigences précédentes, **caractérisé en ce que** les conduites de freinage et les conduites auxiliaires (9.1/9.2) peuvent également être reliées sous pression à l'ensemble d'accouplement (1).

10. Système de freinage hydraulique du côté de la remorque selon l'une des exigences précédentes, **caractérisé en ce que** le régulateur de pression (8) et/ou le robinet à trois voies (6) sont actionnés mécaniquement, électriquement, pneumatiquement ou hydrauliquement.

11. Système de freinage hydraulique côté remorque selon l'une des exigences précédentes, **caractérisé en ce que** les signaux des détecteurs de présence (19 ; 20) sont transmis, sur une base électrique, hydraulique ou mécanique, au système de commande respectif du véhicule tracteur et sont introduits.

12. système de freinage hydraulique côté remorque selon l'une des revendications précédentes, **caractérisé en ce que** le régulateur de pression (8) délivre au cylindre de frein (17) une pression de freinage graduée en fonction de la charge par rapport à la pression de freinage hydraulique entrant de la conduite de frein.

13. Système de freinage hydraulique côté remorque selon l'une des revendications précédentes, **caractérisé en ce que** l'accumulateur de pression (4) peut être vidé manuellement au moyen de la soupape de vidange de l'accumulateur (5) dès que les conduites de frein et auxiliaires (9.1, 9.2) sont couplées.

14. Système de freinage hydraulique côté remorque selon l'une des revendications précédentes, **caractérisé en ce que** lors du découplage de la conduite de freinage (9.1) et/ou de la conduite supplémentaire (9.2) située dans le premier raccord (2.1) du dispositif de raccordement ' (2), un processus de freinage commandé est déclenché en appliquant une pression au cylindre de frein (17) via la vanne trois voies (6) par un accumulateur de pression (4).

15. Système de freinage hydraulique du côté de la remorque selon l'une des revendications précédentes, **caractérisé en ce qu'**une opération de freinage commandée est déclenchée par une fuite ou une accumulation de pression manquante dans la conduite auxiliaire (9.2), dans laquelle la vanne à trois voies (6) est réglée dans une position dans laquelle l'accumulateur de pression (4) applique la pression au cylindre de frein (17).

16. Système de freinage hydraulique côté remorque selon l'une des exigences précédentes, **caractérisé en ce que**, selon les exigences spécifiques, des ensembles d'accouplement (1), des ensembles de soupapes (3) et des groupes de régulation de pression (7) peuvent être montés en plusieurs versions et combinés les uns aux autres.

17. Procédé pour faire fonctionner un système de freinage hydraulique côté remorque selon l'une des revendications 1 à 16, qui peut fonctionner à la fois comme système de freinage à conducteur unique et comme système de freinage à deux fils, **caractérisé en ce que** le passage du système de freinage à conducteur unique au système de freinage à deux fils et vice versa s'effectue au moyen de la conduite auxiliaire (9.2) qui est amenée sur la première connexion (2.1) et le signal du capteur de présence (19) sur la première connexion (2.1) met en court les fonctions de la conduite auxiliaire (9.2) et celle-ci est donc neutralisée.
